# DEMANDE DE BREVET EUROPEEN

(11) **EP 2 957 545 A1**
(43) Date de publication de la demande: **23.12.2015**
(21) Numéro de dépôt: 14172726.3
(22) Date de dépôt: 17.06.2014
(51) Int. Cl.: C03B 5/193

(54) **Dispositif d'injection de fluide gazeux**

(71) Demandeur: AGC Glass Europe, 1348 Louvain-la-Neuve (BE)
(72) Inventeur: Delmotte, LAURENT, 4219 MEEFLE (BE); Cherdon, BENOIT, 6044 ROUX (BE); Fontaine De Ghelin, OLIVIER, 1460 ITTRE (BE)
(74) Mandataire: Le Vaguerèse, Sylvain Jacques

(57) **Abrégé**

L'invention concerne un dispositif d'injection de fluide gazeux au sein de matières vitreuses en fusion dans les fours de verrerie et en particulier destiné à l'injection de fluide gazeux présentant des risques de condensation au sein du dispositif d'injection. Le dispositif comprend un ensemble de parois concentriques, une paroi dite externe qui est en contact avec le verre fondu, une paroi dite interne qui est constituée par un tube disposé axialement conduisant le fluide gazeux à l'extrémité du dispositif plongé dans la matière vitreuse fondue, un circuit de refroidissement basé sur la circulation d'un fluide de refroidissement au sein du dispositif. Le dispositif est caractérisé en ce que la paroi interne du tube d'injection du fluide gazeux ne forme pas une paroi en contact avec le fluide de refroidissement circulant au sein du dispositif.

## Description

La présente invention concerne un dispositif d'injection de fluides gazeux au sein de matières vitreuses en fusion dans les fours de verrerie et en particulier destiné à l'injection de fluide gazeux présentant des risques de condensation au sein du dispositif d'injection.

En effet, dans le processus de fabrication des matières vitreuses (verre flotté, verre de bouteillerie, fibre de verre, laine de verre, etc...) l'injection d'un fluide gazeux est très souvent utilisée pour notamment assurer un brassage suffisant de la matière en fusion (verre en fusion ou verre fondu) au sein du four (US3397973, US3853524, EP2228348 par exemple), injecter des matières sous forme gazeuse au sein du verre fondu, contrôler certaines réactions ou équilibres chimiques par l'adjonction de certains fluides gazeux au sein du verre fondu.

Lorsque le fluide gazeux pénètre dans le verre en fusion, plusieurs phénomènes peuvent se produire. Le plus certain est la formation de bulles au sein du verre en fusion, la taille des bulles pouvant varier et évoluer au cours de leur parcours au sein du verre en fusion. Par exemple, une partie de ces bulles peut s'échapper du verre en fusion en atteignant la surface, une autre partie peut se dissoudre complètement dans le verre en fusion ou subsister partiellement voire encore totalement. Des gaz dissous dans le verre en fusion peuvent aussi interagir avec les bulles initialement formées et modifier ainsi leurs volumes et compositions chimiques initiales.

L'importance de ces différents phénomènes dépend de nombreux paramètres, notamment les caractéristiques de la structure du dispositif, les paramètres d'injection du fluide gazeux (débit constant ou pulsé, des débits de plusieurs Nm³/h ne sont pas rares, pression d'injection, température d'injection), la température du verre en fusion et ses caractéristiques de viscosité, densité, composition chimique etc...

La structure la plus souvent rencontrée du dispositif est souvent sous la forme d'un assemblage tubulaire par lequel on injecte le fluide gazeux au sein du verre en fusion. Cet assemblage tubulaire traverse une des parois du four pour rentrer en contact avec le verre en fusion. Une disposition très souvent rencontrée est une position verticale dans le fond du four (dit la sole du four). Dans ce cas, une des extrémités du dispositif est sous la sole du four et l'autre, dite la tête, débouche dans le verre en fusion. Cette tête est soit au ras de la sole ou engagée plus profondément dans la masse de verre en fusion. Des enfoncements de plusieurs dizaines de centimètres du dispositif dans le verre en fusion sont courants. Des dispositions non verticales sont aussi possibles, par exemple inclinées voire même horizontales. L'alimentation en fluide gazeux se fait depuis l'extrémité située en dehors du four et l'injection du gaz dans le verre en fusion se réalise par la tête.

La partie du dispositif comprise entre la tête et la paroi du four est en contact avec du verre en fusion. Cette partie est donc exposée à des températures élevées, entre 1000 et 1500°C, et à un milieu agressif et corrosif qu'est le verre en fusion. Dans un tel environnement, pour résister mécaniquement, thermiquement et éviter une corrosion et érosion du dispositif, il faut prévoir une réalisation technique adaptée. Cela passe par un choix de matériau adéquat et dans la quasi-totalité des cas par un système de refroidissement. Les matériaux communément utilisés sont de l'acier mécanique (ST 37 par exemple), des nuances d'acier (aciers réfractaires), des matériaux céramiques réfractaires, des métaux nobles tel que le platine ou ses alliages.

En fonction du choix du matériau, il convient de maintenir le dispositif dans une plage de température adéquate au sein du verre fondu.. Cela se réalise communément par le contrôle de sa température via un refroidissement du dispositif. Plus la partie qui est en contact avec le verre en fusion est importante, plus ce refroidissement doit être efficace. Pour les réalisations tubulaires en acier assez fréquentes, on tache de rester en dessous des 500°C environ et de préférence aux alentours de 450°C, en particulier dans les zones de soudure.

Un système de refroidissement très commun, est réalisé par la circulation forcée d'un fluide de refroidissement au sein du dispositif. Les fluides de refroidissement les plus couramment utilisés sont l'eau, l'huile, un mélange d'huile, de l'huile de silicone, un mélange d'huile de silicone. Pour chaque type de circulation et fluide de refroidissement envisagés, des contraintes de fonctionnement apparaissent, en particulier la température maximum que le fluide de refroidissement peut atteindre sans préjudice de sa qualité et état, pression maximum supporté par le circuit, débit à fournir, etc... Pour l'eau par exemple, on tache en général de ne pas dépasser environ 50°C et de rester préférentiellement aux alentours des 40°C au sein du dispositif afin de se prémunir des phénomènes de précipitation, dépôt et encrassement au sein du circuit de refroidissement. Ces précipités, dépôts et encrassements peuvent générer des points chauds au sein du circuit de refroidissement qui peuvent conduire à une vaporisation locale de l'eau. Cela a pour conséquence d'accentuer à cet endroit la vitesse de précipitation et l'encrassement et en final la quantité de dépôt et la dureté de celui-ci. Ce phénomène s'auto entretien et s'accélère de lui-même. Il conduit à terme à un échauffement local tel que le dispositif peut être fortement endommagé voire même détruit. Les débits d'eau utilisés vont dépendre de la géométrie du dispositif et de la surface en contact avec le verre en fusion, du type de circuit de refroidissement, etc... Des débits d'eau de l'ordre de plusieurs milliers de litres par heure et par dispositif sont assez fréquents.

Le refroidissement du dispositif a pour conséquence une baisse de la température du fluide gazeux que l'on désire injecter dans le verre en fusion. Si cette chute de température est trop importante, des phénomènes de condensation du fluide gazeux injecté peuvent se produire au sein du dispositif d'injection et aboutir à une injection partielle voire complète du fluide sous forme liquide et non gazeuse au sein du verre fondu.

Cette injection sous forme liquide est en général à éviter car elle conduit à une remise très rapide en phase gazeuse du fluide injecté lorsqu'il rentre en contact avec du verre fondu. Cela se traduit par la création d'un grand nombre de bulles de tailles non contrôlées qui très souvent sont source de défauts dans le produit fini, en particulier dans la fabrication de verre plat (flotté). De plus cela conduit aussi à une instabilité du processus d'injection se traduisant par des variations de pression et de débit avec de potentiel coup de bélier au sein de l'installation.

Il convient donc d'éviter ces phénomènes de condensation du fluide gazeux injecté au sein du dispositif d'injection. Pour résoudre ce problème, il convient de s'assurer que la température du fluide gazeux injecté ne descendra pas en dessous de sa température de condensation fixée par les conditions opératoires d'injection (pression, caractéristiques du fluide qui peut être un gaz pur ou un mélange de différents gaz). Par exemple, si le fluide gazeux injecté est de la vapeur d'eau, un mélange gazeux contenant au moins 50 % de vapeur d'eau, on ne descendra pas en dessous d'une centaine de degré.

Vu la nécessité du contrôle de la température du dispositif au sein du verre fondu, il y a donc un compromis à trouver entre le refroidissement adéquat du dispositif afin de préserver sa tenue mécanique, sa résistance à la corrosion et érosion et le maintien de la température du fluide injecté au-dessus de sa température de condensation.

La présente invention concerne un dispositif avantageux permettant l'injection d'un fluide gazeux au sein de matières vitreuses en fusion dans les fours de verrerie en s'assurant que le fluide injecté reste en phase gazeuse dans le dispositif et ce malgré la présence d'une circulation de fluide de refroidissement, assurant la tenue mécanique et la résistance à la corrosion et érosion du dispositif au sein de la matière vitreuse en fusion.

Le dispositif selon l'invention tel que présenté à la revendication 1 se distingue de l'art antérieur en ce qu'il comporte un système d'isolation thermique du conduit amenant le fluide gazeux injecté par rapport au système de refroidissement utilisé dans ce genre de dispositif. Ce système d'isolation est composé d'une chambre qui sépare le conduit d'injection du fluide gazeux du circuit de refroidissement. Cette chambre creuse est remplie d'un gaz qui peut circuler ou non, par exemple de l'air. La géométrie de cette chambre et son étendue dépend du niveau d'isolation recherchée et de la structure générale du dispositif.

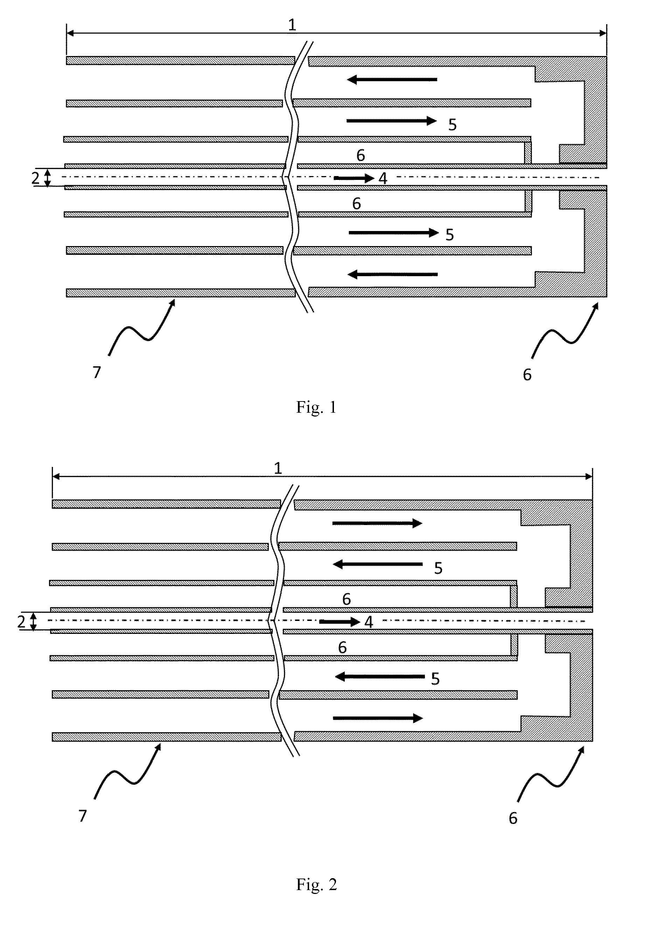

Des exemples de réalisation et du fonctionnement du dispositif sont illustrés dans la suite. Aux figures 1 et 2, un premier exemple de réalisation est donné. Le dispositif est en général placé verticalement et traverse de part en part le fond du four. Le matériau pour le réaliser est communément de l'acier mécanique (ST27 par exemple) mais peut être aussi d'autres nuances d'acier et ou de métaux nobles tels que le platine et ses alliages. La partie 7, est située en dehors du verre fondu, sous la sole du four. La partie 8, appelée la tête du dispositif, est la partie du dispositif la plus proche de la surface du bain de verre fondu. Par la partie centrale 4, on injecte un fluide gazeux dans le verre en fusion. Entre la tête du dispositif 8 et la sole du four, le dispositif est en contact avec le verre en fusion.

Du à ce contact entre le verre en fusion très chaud (entre 1000 et 1500°C) et le matériau, il est nécessaire de refroidir le dispositif. Une méthode très souvent utilisée consiste à faire circuler un fluide de refroidissement 5 au sein du dispositif. Ce fluide est par exemple de l'eau. Deux circulations sont possibles. Soit comme à la figure 1, le liquide de refroidissement rentre par le centre et ressort en longeant la paroi extérieure, soit comme à la figure 2, le liquide de refroidissement rentre en longeant la paroi extérieure et ressort du dispositif par le centre. Afin d'isoler thermiquement le conduit d'injection du fluide gazeux du circuit de refroidissement, une zone d'isolation est placée entre le circuit de refroidissement et le circuit d'injection. Cette zone prend la forme d'une chambre d'isolation 6 remplie d'un gaz, par exemple de l'air. Cette chambre est présente sur quasiment toute la longueur 1 du dispositif. Dans cette première version, cette chambre d'isolation 6 s'arrête avant la tête du dispositif 8. Les deux configurations de circulation du fluide de refroidissement ne sont pas égales d'un point de vue de l'isolation thermique du tube d'injection central. La configuration de la figure 2 donne de meilleurs résultats d'isolation thermique du tube central.

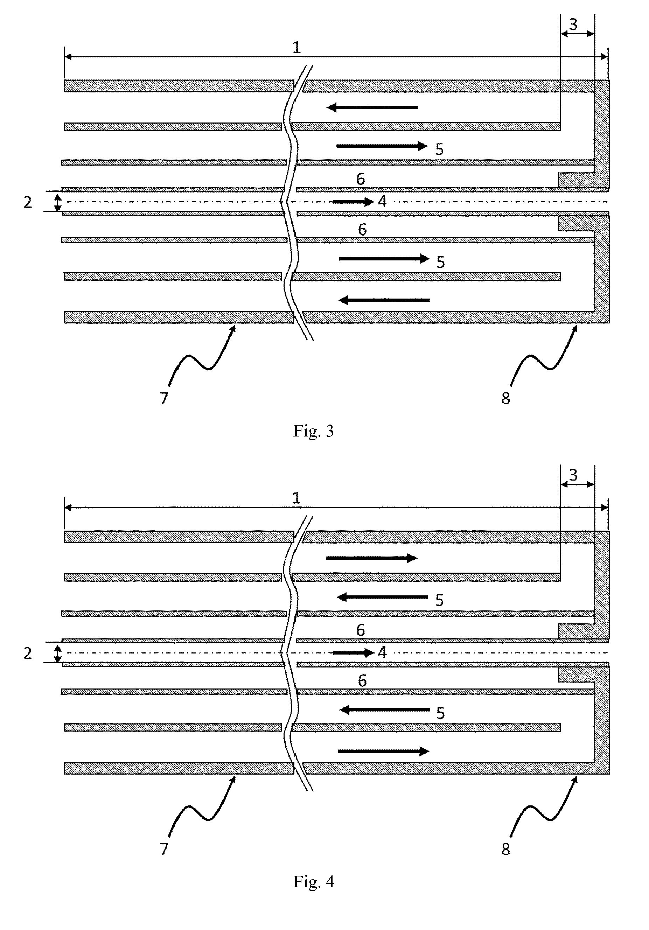

Aux figures 3 et 4, une deuxième version du dispositif est présentée. Le mode de fonctionnement et les caractéristiques générales sont semblables à la première version. La différence se porte sur la forme de la tête du dispositif 8 et de la chambre d'isolation 6. En effet dans ce cas, la chambre d'isolation 6 se poursuit jusqu'à la tête du dispositif 8, ce qui n'est pas le cas dans la version précédente. Ici aussi le circuit de refroidissement 5 peut être réalisé dans deux sens différents. Soit du centre vers l'extérieur comme à la figure 3 ou de l'extérieur vers le centre comme à la figure 4. Comme dans la version précédente, ces deux manières de procéder ne sont pas équivalentes d'un point de l'isolation thermique de la partie centrale d'injection du fluide gazeux 4. La version de la figure 4 est la plus efficace. La dimension 3, soit la distance de passage du canal de liquide de refroidissement au niveau de la tête du dispositif 8 est pour cette version de l'ordre de 10 mm.

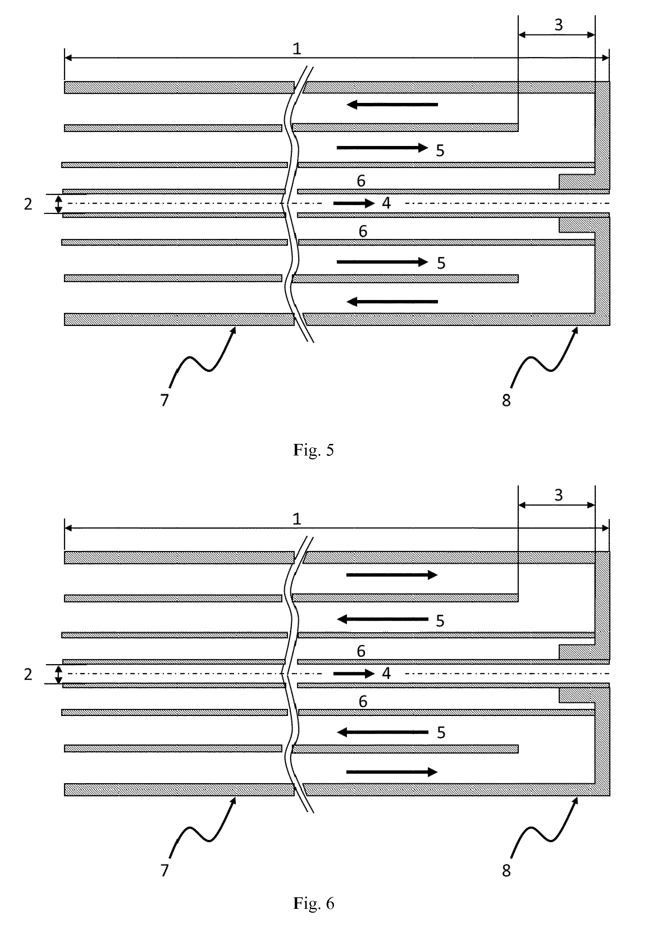

Aux figures 5 et 6, une troisième version est présentée. Elle se distingue de la précédente en ce que la distance 3 est plus grande, entre 20 et 30 mm. Comme pour les précédentes versions, deux sens de circulation du liquide de refroidissement sont possibles. Comme pour les deux premières versions, la version de la figure 6 est la plus efficace. Cette modification du canal de refroidissement 5 au niveau de la tête du dispositif 8 permet de réduire la vitesse de l'écoulement en tête 8. La conséquence est une diminution de l'efficacité du refroidissement en tête 8 mais aussi une amélioration de l'isolation thermique du conduit central d'injection 4 proche de la sortie. L'optimum de cette distance 3 est un compromis entre la nécessité de maintenir l'enveloppe extérieurs du dispositif à un niveau de température acceptable et la volonté de préserver une température suffisante du fluide gazeux injecté afin d'éviter les phénomènes de condensation du dit fluide gazeux. Dans le cas d'une fabrication en acier, on tache de ne pas dépasser des températures de l'ordre de 500°C pour les parties métalliques, en particulier dans les zones de soudure. Par exemple, en cas d'injection de vapeur d'eau, on tache de maintenir sa température au sein du dispositif d'injection au-dessus d'une centaine de degrés Celsius.

Pour les trois versions présentées, la longueur totale du dispositif 1, soit entre les deux extrémités 7 et 8 est en générale aux alentours de 1,50m. Le diamètre 2 du conduit d'injection central du fluide gazeux 4 est de l'ordre de 5 à 10 mm. La partie du dispositif qui est en contact avec le verre fondu, soit la partie entre la tête du dispositif et la paroi du four est de l'ordre de 0 à 0,6m.Les débits de fluide gazeux injecté 4 dans le verre fondu sont entre 0 et 3,5 Nm³/h. Dans le cas d'injection de vapeur d'eau, la température d'injection se situe au minimum à 100°C. La pression d'injection est entre 1 et 4 à 5 bar.

Comme mentionné plus haut, un refroidissement du dispositif est nécessaire, pour les fabrications en acier notamment. Dans le cas d'utilisation d'eau comme liquide de refroidissement, on veille généralement à ce que la température de l'eau ne dépasse pas une cinquantaine de degrés Celsius ceci afin d'éviter des problèmes de précipitations et dépôt de matières minérales et encrassement du circuit de refroidissement. Ces dépôts et encrassements sont à terme source de mauvais échanges de chaleur entre l'eau de refroidissement et le dispositif. Là où ces dépôts et encrassements stagnent, l'eau peut même se mettre sous forme de vapeur avec pour conséquences d'augmenter la vitesse de précipitation et de dépôt, de réduire encore davantage le refroidissement et ainsi d'auto-entretenir le phénomène et l'accélérer. Cela peut mener à la destruction du dispositif : fuite du circuit de refroidissement, entrée d'eau liquide de refroidissement dans le verre en fusion et génération de défauts dans le verre en fusion. En général, ces défauts peuvent prendre la forme de bulles, inclusions métalliques, d'oxyde métallique, etc... Il est évident que ces défauts sont à proscrire car rédhibitoires, en particulier pour la production de verre plat. Cette régulation de la température du liquide de refroidissement se fait par un débit de liquide de refroidissement suffisant. Dans le cas d'utilisation d'eau comme liquide de refroidissement, un débit usuel est entre 1000 et 4000 litres/heure et préférentiellement aux alentours de 2000 litres/heure.

## Revendications

1. Dispositif tubulaire d'injection de fluide gazeux dans un bain de verre fondu dans un four de fusion du verre, comprenant un ensemble de parois concentriques, une paroi dite externe étant en contact avec le verre fondu, une paroi dite interne étant constituée par un tube disposé axialement conduisant le fluide gazeux à l'extrémité du dispositif plongé dans le verre fondu, entre ces parois interne et externe un fluide de refroidissement circulant en boucle longitudinalement le long des parois externe et interne dans l'un ou l'autre sens, avec inversion du sens de circulation à proximité de l'extrémité d'injection du fluide gazeux, cette circulation étant ménagée au moyen d'une paroi dite intermédiaire, disposée entre les parois interne et externe, **caractérisé en ce que** le tube conduisant le fluide gazeux ne constitue pas une paroi en contact avec le fluide de refroidissement.

2. Dispositif selon la revendication 1 dans lequel le tube conduisant le fluide gazeux injecté est doublé d'un conduit concentrique distant du tube conduisant le fluide gazeux injecté dans le verre fondu.

3. Dispositif selon la revendication 2 dans lequel l'espace entre le tube conduisant le fluide gazeux injecté dans le verre fondu et le conduit concentrique à ce tube est rempli d'un gaz, limitant l'échange thermique entre le circuit de refroidissement et le fluide gazeux injecté dans le verre fondu.

4. Dispositif selon la revendication 3 dans lequel le gaz est de l'air qui n'est pas conduit à circuler.

5. Dispositif selon l'une des revendications précédentes dans lequel l'extrémité plongeant dans le verre fondu est close par soudure à l'exclusion du tube d'injection du fluide gazeux.

6. Dispositif selon l'une des revendications précédentes dans lequel l'extrémité plongeant dans le verre fondu est close par soudure à l'exclusion du tube d'injection du fluide gazeux.

7. Dispositif selon l'une quelconque des revendications précédentes dans lequel la paroi externe est en acier.

8. Procédé de mise en oeuvre du dispositif selon l'une des revendications précédentes dans lequel la circulation du fluide de refroidissement est réglée de manière telle que la température de la paroi au contact du verre ne dépasse pas une température limite afin de maintenir une tenue mécanique suffisante et de réduire les phénomènes de corrosion et d'érosion du matériau au contact du verre fondu, cette température limite étant de l'ordre de 500°C pour les constructions en acier, préférentiellement aux alentours de 450°C.

9. Procédé selon la revendication 8 dans lequel le fluide gazeux injecté est de la vapeur d'eau ou un mélange gazeux contenant au moins 50% de vapeur d'eau, la circulation du fluide de refroidissement étant réglée de manière que la température du tube conduisant ce fluide gazeux, ne soit pas inférieure à la T° de condensation du gaz ou de son mélange sur toute sa longueur.

10. Procédé selon la revendication 9 dans lequel le débit de vapeur d'eau injectée est au plus égal à 3,5Nm3/h.

11. Procédé selon l'une des revendication 8 à 10 dans lequel le fluide de refroidissement est à base d'eau, et la température de l'eau à la sortie du dispositif n'étant pas supérieure à environ 50°C et préférentiellement aux alentours de 40°C.
